# EUROPÄISCHE PATENTANMELDUNG

(11) **EP 4 538 123 A1**
(43) Veröffentlichungstag der Anmeldung: **16.04.2025**
(21) Anmeldenummer: 23202380.4
(22) Anmeldetag: 09.10.2023
(51) Int. Cl.: B60R 19/34, B62D 29/00

(54) **CRASHBOX FUER EINE STOSSFAENGERANORDNUNG EINES KRAFTFAHRZEUGS SOWIE EINE STOSSFAENGERANORDNUNG EINES KRAFTFAHRZEUGS MIT ZWEI SOLCHER CRASHBOXEN UND EIN VERFAHREN ZUR HERSTELLUNG EINER SOLCHEN STOSSFAENGERANORDNUNG**

(71) Anmelder: Benteler Automobiltechnik GmbH, 33102 Paderborn (DE)
(72) Erfinder: Straznikiewicz, Dariusz, 33102 Paderborn (DE); Hitz, Andreas, 59597 Erwitte (DE); Rabe, Frank, 32120 Hiddenhausen (DE); Reitz, Serge, 33104 Paderborn (DE); Schultz, Annika, 33102 Paderborn (DE); Schröter, Martin, 33102 Paderborn (DE)
(74) Vertreter: Hannke Bittner & Partner mbB Kassel

(57) **Zusammenfassung**

Die Erfindung betrifft ein Hohlkammerbauteil (1) zum Einbau in Längsrichtung eines Kraftfahrzeuges mit zwei c-förmigen Schalen (2, 3), wobei diese jeweils aus zwei Schenkeln (4, 5; 6, 7) gebildet sind, die über eine Basis (8, 9) miteinander verbunden sind, und wobei die beiden c-förmigen Schalen (2, 3) an ihren Schenkeln (4, 5; 6, 7) miteinander gefügt sind, dadurch gekennzeichnet, dass die Schalen (2, 3) aus einem Kaltformstahl bestehen und in ihren Verbindungsbereichen (10, 11; 12, 13) zur jeweiligen Basis (8, 9) jeweils mit wenigstens einer Fase (14, 15, 16, 17; 18, 19, 20, 21) ausgebildet sind, wobei diese wenigstens eine Fase (14, 15, 16, 17; 18, 19, 20, 21) gegenüber den Schenkeln (3, 4; 5, 6) und/oder der die Schenkel (3, 4; 5, 6) verbindende Basis (8, 9) um einen Winkel α zwischen 120° bis 160° geneigt ist sowie an einem endseitigen Längenabschnitt (22) mit wenigstens einer Sicke (23, 24) ausgebildet ist.

## Beschreibung

Die Erfindung betrifft ein Hohlkammerbauteil zum Einbau in Längsrichtung eines Kraftfahrzeuges mit zwei c-förmigen Schalen, wobei diese jeweils aus zwei Schenkeln gebildet sind, die über eine Basis miteinander verbunden sind, und wobei die beiden c-förmigen Schalen an ihren Schenkeln miteinander gefügt sind.

### Derartige Hohlkammerbauteile sind in der Regel als Crashboxen oder Längsträger zum Einbau in Längsrichtung eines Kraftfahrzeuges ausgebildet

Crashboxen finden in der Regel bei allen Kraftfahrzeugen Verwendung und haben die Aufgabe, in einem Crashfall die über die Stoßfängeranordnung eingeleitete Energie in den Crashboxen durch entsprechende Faltung beziehungsweise Deformation der Crashboxen zu absorbieren und überschüssige Energie in den Rahmen beziehungsweise die Fahrzeuglängsträger des Kraftfahrzeuges weiterzuleiten, um so die durch den Crash in das Kraftfahrzeug eingebrachte Energie um die Fahrgastzelle herumzuleiten und Schäden an der Fahrgastzelle zu minimieren und somit das Verletzungsrisiko der Fahrgäste zu reduzieren. Während die Crashboxen die Aufgabe haben, im Crashfall gezielt zu kollabieren, müssen die Längsträger besonders stabil ausgebildet sein, um die aus den Crashboxen im Crashfall weitergeleitete Energie zu absorbieren, ohne zu kollabieren.

Aus der DE 10 2006 013 274 A1 ist eine zweischalige Crashbox aus zwei miteinander gefügten Blechschalen bekannt, die an den Flanschplattenseiten lokal mit Fasen versehen sind, während die DE 10 2005 029 726 B4 eine zweischalige Crashbox aus Metallblechen zeigt, wobei in einem Eckbereich eine von einem zum anderen Ende der Crashbox größer werdende Fase angeordnet ist.

Die JP 02175452 A zeigt eine zweischalige Crashbox aus Stahlblech, wobei die Crashbox mit mehreren senkrecht zu ihrer Längserstreckung und parallelen umlaufenden Wülsten versehen ist. Die Wülste dienen dabei als bestimmungsgemäße Biegestellen. Die US 2022348263 A1 dagegen zeigt eine zweischalige im Wesentlichen rechteckige Längsträger/Crashbox-Kombination, die aus wärmebehandelten Stahlblechen gebildet ist.

Die in der Regel aus gewalztem Stahl bestehenden Hohlkammerbauteile, welche aus dem Stand der Technik bekannt sind, weisen zwar eine Anforderung an das Hohlkammerbauteil entsprechende Festigkeit auf. Dazu ist allerdings zum Erreichen eines bestimmungsgemäßen Formänderungswiderstandes beziehungsweise einer bestimmungsgemäßen Energieaufnahmefähigkeit eine große Wanddicke beziehungsweise Masse erforderlich. Zudem erfordern gegebenenfalls die Vorgänge des Warmwalzens, des Warmumformens, des thermischen Härtens, Anlassens und Fügens von solchen gewalzten Stahlbauteilen aufgrund der zum Erreichen der bestimmungsgemäßen Energieaufnahmefähigkeit erforderlichen Masse eine relativ große Menge an Wärme mit einer Temperatur im Bereich zwischen der Anlass- und Walztemperatur von wenigstens 720° C bis zur Schmelztemperatur des Stahls im Schweißvorgang. Dies kann zu Strukturänderungen innerhalb des verwendeten Stahls kommen, sodass sich in diesen Bereichen seine Eigenschaften hinsichtlich der Festigkeit und Stabilität der daraus hergestellten Teile mitunter negativ verändern.

Es ist daher Aufgabe der Erfindung, ein Hohlkammerbauteil zum Einbau in Längsrichtung eines Kraftfahrzeuges nach dem Oberbegriff des Patentanspruchs 1 derart zu verbessern, dass bei gleicher oder größerer Festigkeit eine geringere Wanddicke beziehungsweise Masse des Hohlkammerbauteils erreicht werden kann, wobei die Gestalt und die Ausmaße im Wesentlichen unverändert gegenüber dem aus dem Stand der Technik bekannten Hohlkammerbauteilen sind und dabei einen gleichen beziehungsweise verbesserten Formänderungswiderstand beziehungsweise eine verbesserte Energieaufnahmefähigkeit aufweisen.

Gelöst wird diese Aufgabe durch ein Hohlkammerbauteil zum Einbau in die Längsrichtung eines Kraftfahrzeuges mit allen Merkmalen des Patentanspruchs 1. Vorteilhafte Ausgestaltungen der Erfindung finden sich in den Unteransprüchen.

Das erfindungsgemäße Hohlkammerbauteil zum Einbau in Längsrichtung eines Kraftfahrzeuges weist dabei zwei c-förmige Schalen auf, wobei diese jeweils aus zwei Schenkeln gebildet sind, die über eine Basis miteinander verbunden sind, und wobei die beiden c-förmigen Schalen an ihren Schenkeln miteinander gefügt sind. Das erfindungsgemäße Hohlkammerbauteil zeichnet sich nunmehr dadurch aus, dass die Schalen aus Kaltformstahl bestehen und in ihren Verbindungsbereichen zur jeweiligen Basis jeweils mit wenigstens einer Fase ausgebildet sind, wobei diese wenigstens eine Fase gegenüber den Schenkeln und/oder der die Schenkel verbindenden Basis um einen Winkel α zwischen 120° bis 160° geneigt sowie an einem endseitigen Längenabschnitt mit wenigstens einer Sicke ausgebildet ist.

Durch die erfindungsgemäße Ausgestaltung des Hohlkammerbauteils zum Einbau in Längsrichtung eines Kraftfahrzeuges können solche Hohlkammerbauteile in einer besonders wirtschaftlichen Weise gefertigt werden, da die für das Hohlkammerbauteil verwendeten Bleche zu den c-förmigen Schalen kaltumgeformt werden, sodass kein energetischer Aufwand zur Erhitzung der Bleche zur Warmumformung betrieben werden muss. Insofern ist auch der apparative Aufwand zur Herstellung solcher c-förmigen Schalen gegenüber solchen welche warmumgeformt werden, deutlich minimiert, ohne dass nachteilige Eigenschaften hinsichtlich des Formänderungswiderstandes beziehungsweise der Energieaufnahmefähigkeit im Crashfall hingenommen werden müssen. Zudem findet aufgrund der nicht in den Stahl eingebrachten Wärmeenergie auch keine Strukturänderung des Stahls statt, sodass auch die Festigkeitseigenschaften im Wesentlichen unverändert bleiben.

Bei Verwendung eines Dualphasenstahls als Kaltformstahl, welcher eine größere Festigkeit als Komplexphasenstahl aufweist, erfährt das Blech während des plastischen Umformens ein gesteigertes Festigen der Beul- und Biegestellen, was zum Vermindern eines unerwünschten Rückfedervorgangs und zum Ausschließen einer unerwünschten Rissbildung beiträgt.

Nach einer ersten vorteilhaften Ausgestaltung der Erfindung ist das Hohlkammerbauteil als Crashbox für eine Stoßfängeranordnung eines Kraftfahrzeuges oder als Längsträger eines Kraftfahrzeuges ausgebildet. Sowohl Crashboxen als auch Längsträger sind zum Einbau in Längsrichtung eines Kraftfahrzeuges vorgesehen und müssen entsprechende Festigkeiten aufweisen, um ihre vorgesehene Funktion zu erfüllen. Dabei müssen die Längsträger besonders stabil sein, damit sie im Crashfall möglichst viel Energie aufnehmen können, ohne zu kollabieren. Dazu ist es vorgesehen, dass die Sicken ebenfalls in Längsrichtung des Längsträgers beziehungsweise des Hohlkammerbauteils angeordnet sind. Derartige Sicken tragen dazu bei, dass die Stabilität des Hohlkammerbauteils beziehungsweise des Längsträgers erhöht wird. Im Gegensatz dazu sollen Crashboxen im Crashfall gezielt kollabieren und während des Verformens möglichst viel Crashenergie aufnehmen und in Umformenergie umwandeln. Hierzu ist bei Verwendung der erfindungsgemäßen Hohlkammerbauteile als Crashboxen vorgesehen, dass die Sicken quer zur Längsrichtung der Crashbox angeordnet werden. Derartige Sicken bilden dann entsprechende Sollbiege- beziehungsweise Solldeformationsstellen, die ein gezieltes Kollabieren der Crashbox im Crashfall initiieren und so eine gezielte Verformung der Crashbox ermöglichen, wobei möglichst viel Crashenergie bereits durch die Verformung der Crashbox absorbiert wird. Überschüssige Crashenergie wird nachfolgend in den Längsträger und um die Fahrgastzelle herumgeleitet, sodass diese keinen oder nur reduzierten Schaden nimmt und somit die Sicherheit der Personen in der Fahrgastzelle erhöht ist.

Nach einer weiteren vorteilhaften Ausgestaltung der Erfindung ist es vorgesehen, dass die beiden c-förmigen Schalen an ihren Schenkeln stumpf oder überlappend miteinander stoffschlüssig gefügt, insbesondere verschweißt, sind. Ein derartiges Fügen ist insbesondere mittels eines Verschweißens, Lötens, heiß- oder thermisch aktivierten Klebens möglich. Von Vorteil ist hierbei, dass durch die Verwendung von kaltumgeformten Stahlblechen und insbesondere von Dualphasenstahl diese eine geringere Wärmekapazität aufweisen, wodurch beim thermisch stoffschlüssigen Fügen ein geringerer Wärmebedarf notwendig ist. Hierdurch lassen sich Energiekosten und auch der apparative Aufwand zum Fügen reduzieren, da dieses thermische Fügen, wie beispielsweise Verschweißen oder Verlöten beziehungsweise heiß- oder thermisch aktivierten Kleben weniger Energie aufwendig ist als bei herkömmlich verwendeten Stählen. Zudem wird dadurch die Wahrscheinlichkeit minimiert, dass durch die in die Fügestelle eingebrachte Wärmeenergie Strukturänderungen auftreten, welche die gewünschten Eigenschaften des Stahls im Fügebereich negativ beeinflussen.

Nach einer anderen vorteilhaften Ausgestaltung der Erfindung erstreckt sich die wenigstens eine Fase über eine gesamte Längserstreckung von einem ersten Ende bis zu einem zweiten Ende des Hohlkammerbauteils beziehungsweise der Schalen. Durch diese Ausgestaltung der Erfindung ist die wenigstens eine Fase über die gesamte Längserstreckung des Hohlkammerbauteils ausgebildet, sodass beim Formen der Fase über die Längserstreckung des Bauteils keine unterschiedlichen Umformvorgänge durchgeführt werden müssen. Auch hierdurch ist der apparative und energetische Aufwand, der betrieben werden muss, minimiert.

Daher ist die wenigstens eine Fase mit Ausnahme der wenigstens einen Sicke als planare Fläche ausgebildet. Dabei ist es von Vorteil, dass die Fase über die gesamte Längserstreckung des Hohlkammerbauteils in einem Umformvorgang des Bleches hergestellt werden kann, während die wenigstens eine Sicke nachfolgend in einem weiteren Umformvorgang hergestellt wird.

Alternativ ist es möglich, die Sicke vor Herstellung der Fase in den entsprechenden Flächenbereich des umzuformenden Bleches einzubringen.

Nach einer weiteren vorteilhaften Ausgestaltung der Erfindung ist es vorgesehen, dass eine Sicke in einem Abstand zwischen einem Viertel und einem Drittel der Länge des Hohlkammerbauteils von dessen ersten und/oder zweiten Ende angeordnet ist. Eine derartige Ausbildung des Hohlkammerbauteils bietet sich insbesondere für Crashboxen an, da die dann eingebrachten Sicken entsprechende Solldeformationsstellen bilden, die ein gezieltes Kollabieren der Crashbox im Crashfall mit gezielter Umwandlung von Crashenergie in Umformenergie gewährleisten.

Nach einem weiteren Gedanken der Erfindung sind sowohl die Schenkel und die Basis der c-förmigen Schalen als plane Flächen ausgebildet, die bereits bei Bereitstellung des Bleches zum Umformen zu den c-förmigen Schalen existent sind. Die Umformung erfolgt dann nur in den Verbindungsbereichen der Schenkel und der Basis, in denen auch die wenigstens eine Fase ausgebildet wird.

Vorteilhafterweise sind dabei die Schenkel und die Basis in einem Winkel von im Wesentlichen 90° zueinander angeordnet, sodass das erfindungsgemäße Hohlkammerbauteil mit Ausnahme der Verbindungsbereiche zwischen Schenkel und Basis beziehungsweise im Bereich der Fase eine im Querschnitt rechtwinklige Form ausbildet. Derartige im Wesentlichen rechteckige Querschnitte werden in der Regel bei der Verwendung solcher Hohlkammerbauteile als Crashboxen beziehungsweise Längsträger verwendet und haben sich in der Praxis sehr gut hinsichtlich ihrer funktionellen Anforderungen bewährt. Unter im Wesentlichen 90° wird erfindungsgemäß ein Winkelbereich zwischen 85 und 95° verstanden.

Damit das erfindungsgemäße Hohlkammerbauteil die erforderliche Festigkeit aufweist, ist es vorgesehen, dass der als Dualphasen- oder Komplexphasenstahl ausgebildete Kaltformstahl eine Stahllegierung ist, die Kohlenstoff, Schwefel, Mangan, Titan, Niob, Chrom, Molybdän, Kupfer oder Bor in folgenden Grenzen enthält:

| | |
|---|---|
| C: | 0,05 bis 0,26 % |
| Mn: | 1,30 bis 3,0 % |
| Si: | 0,15 bis 2,2 % |
| P: | max. 0,050 % |
| S: | max 0,010 % |
| AI: | 0,015 bis 2,0 % |
| Ti+Nb; | max 0,25 % |
| Cr+Mo: | max. 1,40 % |
| B | max 0,005 % |
| Cu: | max 0,20% |

Um den Stahl zudem vor Korrosion zu schützen hat sich bewährt, dass das Hohlkammerbauteil verzinkt ist. Alternativ oder zusätzlich kann das geformte, stoffschlüssig gefügte Hohlkammerbauteil insbesondere in Verbindung mit einem angefügten Stoßfängerquerträger mit einer kathodische Tauchlackierung (KTL-lackiert) ausgebildet sein.

Hinsichtlich der Rissbeständigkeit des Hohlkammerbauteils hat es sich bewährt, dass der Kaltformstahl eine Zugfestigkeit Rₘ zwischen 750 und 1200 MPa, insbesondere zwischen 850MPa und 1200MPa aufweist.

In einer weiteren vorteilhaften Ausgestaltung der Erfindung ist es vorgesehen, dass die wenigstens eine Fase die gleiche Wanddicke aufweist wie die Schenkel und die Basen der Schale. Diese Ausgestaltung der Erfindung ist besonders vorteilhaft, da zur Herstellung der c-förmigen Schalen einheitlich dicke Stahlbleche verwendet werden können, die nur in den Verbindungsbereichen zwischen der wenigstens einen Fase und den Schenkeln und der Basen der Schalen umgeformt werden müssen und ansonsten in bestimmten Bereichen nicht durch weitere Verfahrensschritte bearbeitet werden müssen, um die Wanddicke in bestimmten Bereichen zu verändern. Eine weitere Umformung in den Flächenbereichen der c-förmigen Schalen ist mit Ausnahme der einzubringenden Sicken nicht erforderlich.

In einer anderen Ausgestaltung der Erfindung erstreckt sich die wenigstens eine Sicke quer zur Längsachse des Hohlkammerbauteils, insbesondere in dessen Hochrichtung oder Querrichtung, wobei die Längs-, Hoch- und Querrichtung ein rechtwinkliges x, y, z-Koordinatensystem bilden. Durch derartige quer zur Längserstreckung des Hohlkammerbauteils eingebrachten Sicken werden Solldeformationsstellen erzeugt, die im Falle eines Crashs ein als Crashbox ausgebildetes Hohlkammerbauteil gezielt deformieren lässt, wobei während der Deformation der Crashbox Crashenergie in Deformationsenergie umgewandelt wird, die in der kollabierenden Crashbox absorbiert wird.

Nach einer weiteren Ausgestaltung der Erfindung ist es vorgesehen, das Hohlkammerbauteil als Längsträger auszubilden, wobei sich dann die wenigstens eine Sicke in Längsrichtung des Hohlkammerbauteils erstreckt. Wie bereits erwähnt, trägt eine derartige Sicke in Längsrichtung des Hohlkammerbauteils zur Erhöhung der Stabilität des Hohlkammerbauteils bei,

Nach einer weiteren vorteilhaften Ausgestaltung der Erfindung ist es vorgesehen, dass sich die wenigstens eine Sicke bis in eine in der wenigstens einen Fase benachbarten Schenkel und/oder benachbarten Basen der Schalen erstreckt, insbesondere um nicht mehr als 10% der Höhe der jeweiligen Basis beziehungsweise der Breite des jeweiligen Schenkels. Insbesondere ist die wenigstens eine Sicke nicht das gesamte Hohlkammerbauteil umlaufend ausgebildet. Diese Ausgestaltung der Erfindung ist ebenfalls bei Verwendung des Hohlkammerbauteils als Crashbox sinnvoll, da dadurch die gezielte Deformation der Crashbox im Crashfall nochmals verbessert wird.

Dabei hat es sich weiterhin als vorteilhaft erwiesen, dass sowohl bei Verwendung des Hohlkammerbauteils als Crashbox als auch als Längsträger, die wenigstens eine Sicke eine Breite aufweist, die der 4- bis 8-fachen Wanddicke jeweiligen Schale entspricht. Die 4-fache Wanddicke sollte demnach nicht unterschritten werden, da ansonsten unzulässig hohe Eigenspannungen im gesickten Bereich einbracht werden würden, welche bei bestimmungsgemäßem deformationsverlauf zu Rissen und damit zum Bauteilversagen führen könnte.

Um den energetischen Aufwand bei der Herstellung des erfindungsgemäßen Hohlkammerbauteils nochmals zu minimieren, ist es vorgesehen, dass der Dualphasen- oder KomplexphasenStahl, der zur Herstellung der c-förmigen Schalen verwendet wird, kaltgewalzt ist.

Um dabei den Anforderungen als Crashbox oder Längsträger gerecht zu werden, ist es weiterhin vorgesehen, dass die Wanddicke des kaltgewalzten Kaltformstahls zwischen 0,8mm und 3,2mm, vorzugsweise 0,9 und 2,8mm, insbesondere 1,2 und 2,4mm beträgt. Derartige Wanddicken sind ausreichend, um bei Verwendung von Kaltformstahl die Festigkeit und Stabilität des Hohlkammerbauteils zu gewähren.

Um den energetischen Aufwand nochmals zu minimieren ist es erfindungsgemäß vorgesehen, dass der Kaltformstahl zu den c-förmigen Schalen kaltumgeformt ist.

Crashmanagementsystem mit einem Stoßfängerquerträger und zwei daran verschraubten oder verschweißten als Crashboxen ausgebildeten Hohlkammerbauteilen wie sie zuvor beschrieben wurden.

Weitere Ziele, Vorteile, Merkmale und Anwendungsmöglichkeiten der vorliegenden Erfindung ergeben sich aus der nachfolgenden Beschreibung von Ausführungsbeispielen anhand der Zeichnungen. Dabei bilden alle beschriebenen und/oder bildlich dargestellten Merkmale für sich oder in beliebiger sinnvoller Kombination den Gegenstand der vorliegenden Erfindung, auch unabhängig von ihrer Zusammenfassung in den Ansprüchen oder deren Rückbeziehung.

Es zeigen:
- Figur 1:: ein erstes Ausführungsbeispiel eines erfindungsgemäßen Hohlkammerbauteils zum Einbau in Längsrichtung eines Kraftfahrzeuges in einer perspektivischen Ansicht,
- Figur 2:: ein zweites Ausführungsbeispiel eines erfindungsgemäßen Hohlkammerbauteils zum Einbau in Längsrichtung eines Kraftfahrzeuges in einer perspektivischen Ansicht und
- Figur 3:: ein drittes Ausführungsbeispiel eines erfindungsgemäßen Hohlkammerbauteils zum Einbau in Längsrichtung eines Kraftfahrzeuges in einer perspektivischen Ansicht.

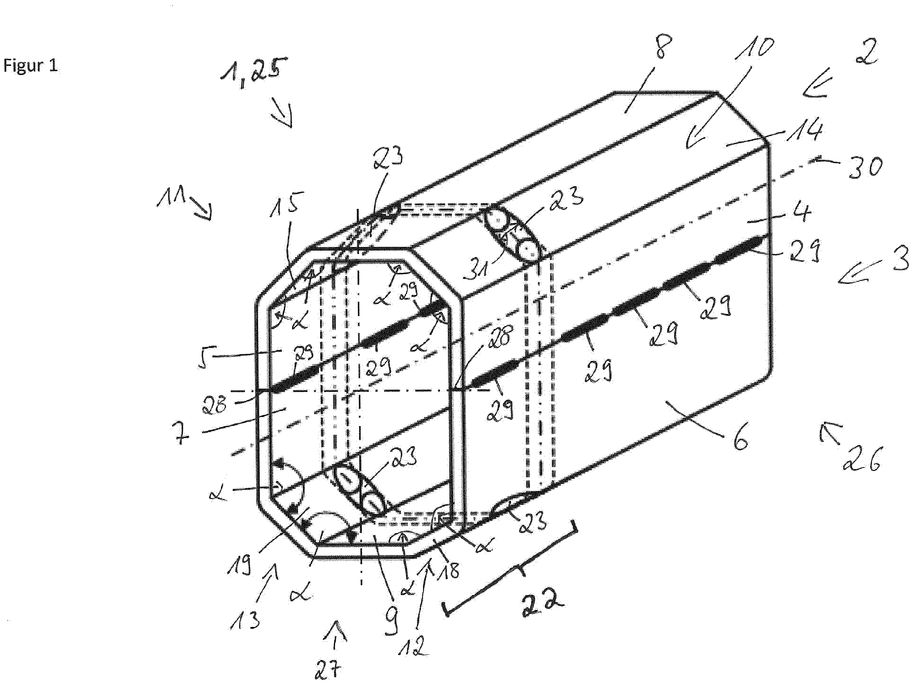

In Figur 1 ist ein erstes Ausführungsbeispiel eines erfindungsgemäßen Hohlkammerbauteils 1 zum Einbau in Längsrichtung eines Kraftfahrzeuges in einer perspektivischen Ansicht dargestellt, welches als eine Crashbox 25 ausgebildet ist. Die Crashbox 25 besteht dabei aus einer oberen c-förmigen Schale 2 und einer unteren c-förmigen Schale 3, welche zu der Crashbox 25 gefügt sind.

Die obere c-förmige Schale 2 weist zwei Schenkeln 4 und 5 auf, welche mit einer Basis 8 verbunden sind. Die Verbindung erfolgt dabei über einen Verbindungsbereich 10 beziehungsweise 11 in welchem zwischen dem jeweiligen Schenkel 4 beziehungsweise 5 und der Basis 8 eine Fase 14 beziehungsweise 15 angeordnet ist. Sowohl die Schenkel 4 und 5 als auch die Basis 8 sind über ihre gesamte Längserstreckung als ebene Flächen mit einer rechteckigen Grundfläche ausgebildet. Die Fasen 14 und 15 in den Verbindungsbereichen 10 und 11 sind mit Ausnahme einer in einem endseitigen Längenabschnitt 22 angeordneten Sicke 23 ebenfalls als ebene Fläche mit einer rechteckigen Grundfläche ausgebildet. Die Sicke 23 kann dabei eine Breite aufweisen, die der vier bis achtfachen der Wanddicke der Schalen 2 und 3 entspricht. Die Schenkel 4 und 5 sind im vorliegenden Ausführungsbeispiel senkrecht zur Basis 8 angeordnet, während in den Verbindungsbereichen 10 und 11 die Fasen 14 und 15 sowohl zur Basis 8 als auch zu dem Schenkel 4 beziehungsweise 5 einen Winkel α von ca. 135° bilden.

In analoger Weise zur oberen c-förmigen Schale 2 ist auch die untere c-förmige Schale 3 aufgebaut. Dabei sind Schenkel 6 und 7 mit einer Basis 9 in Verbindungsbereichen 12 und 13 über Fasen 18 und 19 miteinander verbunden. Auch bei der unteren c-förmigen Schale 3 sind die Schenkel 6 und 7 senkrecht zueinander angeordnet, während die Fasen 18 und 19 sowohl zu den Schenkeln 6 beziehungsweise 7 in den Verbindungsbereichen 12 und 13 zu der Basis 9 einen Winkel α von ca. 135° ausbilden.

Damit aus den beiden c-förmigen Schalen 2 und 3 das Hohlkammerbauteil 1 in Form einer Crashbox 25 entsteht, sind die beiden c-förmigen Schalen 2 und 3 über ihre Schenkel 4 und 5 sowie 6 und 7 miteinander stoffschlüssig gefügt. Im vorliegenden Ausführungsbeispiel sind dabei die Schenkel 4 und 5 der oberen Schale 2 mit den Schenkeln 6 und 7 der unteren Schale 3 über Fügeflächen 28 stumpf miteinander gefügt. Das Fügen der Fügeflächen 28 erfolgt im vorliegenden Ausführungsbeispiel mittels eines Verschweißens über mehrere Fügestellen 29.

Gefertigt sind die c-förmigen Schalen 2 und 3 aus einem kaltgewalzten Stahl mittels eines spanlosen Kaltschneidens, vorzugsweise Stanzen, und eines plastischen Kaltumformens, zum Beispiel Kanten, Biegen, Prägen oder Tiefziehen. Neben dem Verschweißen der beiden Schalen 2 und 3 können als alternative Fügetechniken auch Löten, Plattieren und/oder Kleben, insbesondere Heißkleben in Betracht kommen. Zum Vermeiden einer wärmebedingten Änderung des Stahlgefüges kann dabei ein Kaltfügen mittels eines Strukturklebstoffs stattfinden.

Bei dem kaltgewalzten Stahl, der zur Herstellung der c-förmigen Schalen 2 und 3 verwendet wird, handelt es sich vorteilhafterweise um einen Dualphasen-Stahl oder einen Komplexphasen-Stahl.

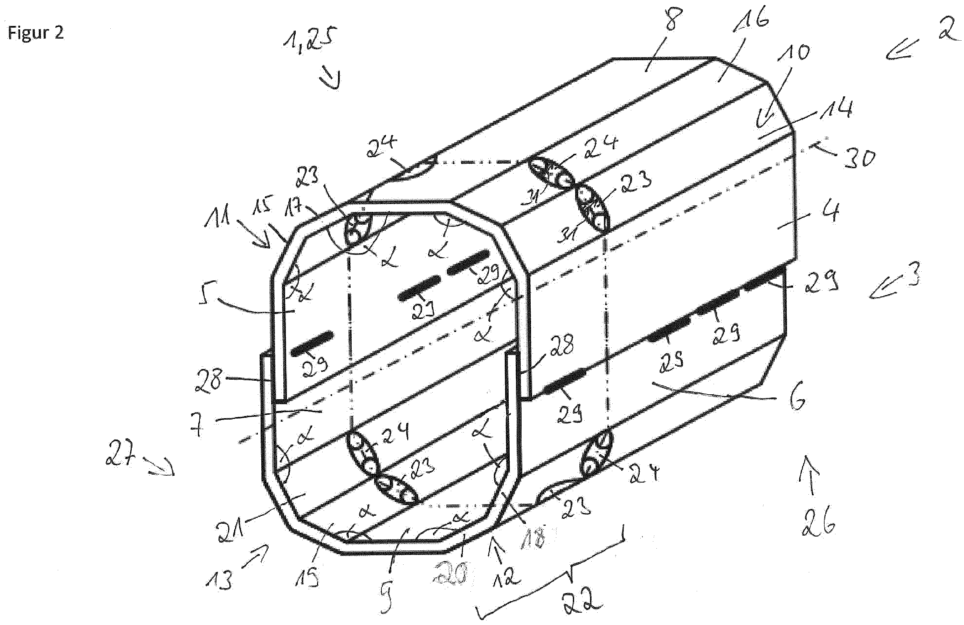

In der Figur 2 ist ein zweites Ausführungsbeispiel eines erfindungsgemäßen Hohlkammerbauteils 1 zum Einbau in Längsrichtung eines Kraftfahrzeuges in einer perspektivischen Ansicht dargestellt, wobei auch dieses Ausführungsbeispiel als Crashbox 25 ausgebildet ist. Auch in diesem Ausführungsbeispiel ist die Crashbox 25 aus zwei c-förmigen Halbschalen 2 und 3 gebildet. Die obere Schale 2 besteht dabei auch aus zwei Schenkeln 4 und 5, welche mit einer Basis 8 in Verbindungsbereichen 10 und 11 über Fasen 14 und 16 beziehungsweise 15 und 17 miteinander verbunden sind. Hierbei handelt es sich pro Schale also um zwei jeweils paarweise angeordnete Fasen, die einen Schenkel mit der Basis verbinden, während in Figur 1 jeweils nur eine einzige Fase die Basis mit dem jeweiligen Schenkel verbindet.

Auch im zweiten Ausführungsbeispiel sind die Schenkel 4 und 5 zur Basis 8 der Schale 2 senkrecht angeordnet, während die Fasen 14 und 15 zu den Schenkeln 4 und 5 in einem Winkel von ca. 160° zueinander angeordnet sind. In gleicher Weise sind die weiteren Fasen 16 und 17 zur Basis 8 ebenfalls in einem Winkel von ca. 160° angeordnet, woraus sich ein Winkel zwischen den paarweise angeordneten Fasen 14, 16 bzw. 15, 17 von 50° ergibt. Alle Winkelangaben können erfindungsgemäß um bis zu +/-10° variieren.

Analog zur oberen c-förmigen Schale 2 ist auch die untere c-förmige Schale 3 aufgebaut. Sie besteht aus einer Basis 9, an welcher senkrecht dazu Schenkel 6 und 7 angeordnet sind. Die Anordnung dieser Schenkel 6 und 7 an die Basis 9 erfolgt wiederum in einem Verbindungsbereich 12 beziehungsweise 13 über Fasen 18 und 20 beziehungsweise 19 und 21.

Auch das Ausführungsbeispiel der Figur 2 weist dabei für die Basen 8 und 9, die Schenkel 4, 5, 6 und 7 sowie die Fasen 14, 15, 16, 17, 18, 19, 20 und 21 plane Flächen mit einer rechteckigen Grundfläche auf.

Im Gegensatz zum ersten Ausführungsbeispiel sind bei diesem Ausführungsbeispiel die c-förmigen Schalen 2 und 3 überlappend angeordnet, wobei der Schenkel 4 der oberen Schale 2 den Schenkel 6 der unteren Schale 3 und der Schenkel 5 der oberen Schale 2 den Schenkel 7 der unteren Schale überlappt. In diesem Überlappungsbereich der Schenkel 4 und 6 beziehungsweise 5 und 7 entsteht somit eine Fügefläche 28, in welche die beiden Schalen 2 und 3 über Fügetechniken über mehrere Fügestellen 29 stoffschlüssig miteinander verbunden werden können.

Zum stoffschlüssigen Fügen bietet sich auch hierbei Löten und Schweißen oder Plattieren und/oder Kleben an, wobei zum Vermeiden einer wärmebedingten Änderung des Stahlgefüges auch ein Kaltfügen der korrespondierenden Seitenflächen mittels eines Strukturklebstoffs durchgeführt werden kann.

Auch in diesem Ausführungsbeispiel sind in einem endseitigen Längenabschnitt 22 die Fasen 14, 15, 16, 17, 18, 19, 20 und 21 mit Sicken 23 beziehungsweise 24 versehen. Diese Sicken 23 und 24 dienen dabei wieder als Solldeformationsstellen der Crashbox 25 in einem Crashfall und sollen ein gezieltes Deformieren bewirken. Die Sicken 23 und 24 können dabei eine Breite 31 aufweisen, die der vier bis achtfachen der Wanddicke der Schalen 2 und 3 entspricht.

Dabei werden als Ausgangsmaterial für die c-förmigen Schalen 2 und 3 wiederum kaltgewalzte Dualphasen-Stähle beziehungsweise Komplexphasen-Stähle verwendet, welche durch spanloses Kaltschneiden, vorzugsweise Stanzen, und durch plastisches Kaltumformen, zum Beispiel Kanten, Biegen, Prägen und/oder Tiefziehen zu den c-förmigen Schalen 2 und 3 umgeformt werden. Wie schon dargestellt, kommt für das stoffschlüssige Fügen ein Löten, Schweißen, Plattieren und/oder Kleben in Betracht.

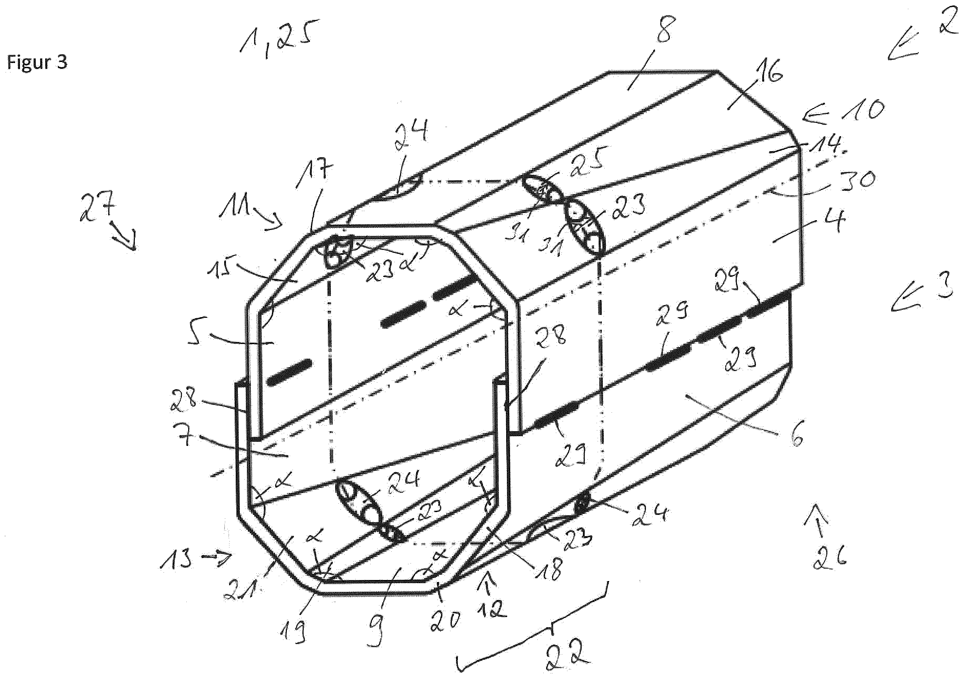

Die Figur 3 zeigt nunmehr ein weiteres Ausführungsbeispiel eines erfindungsgemäßen Hohlkammerbauteils 1 zum Einbau in Längsrichtung eines Kraftfahrzeuges in einer perspektivischen Ansicht, welches ebenfalls als Crashbox ausgebildet ist. Dieses Ausführungsbeispiel entspricht im Wesentlichen dem der Figur 2, wobei allerdings die Fasen 14 und 16 beziehungsweise 15 und 17 und 18 und 20 beziehungsweise 19 und 21 zwischen den Schenkeln 4 und 5 beziehungsweise 6 und 7 und den dazu korrespondierenden Basen 8 und 9 nicht als plane rechteckige Flächen ausgebildet sind, sondern als plane trapezförmige Flächen. Ansonsten entspricht der gesamte Aufbau dieser Crashbox 25 dem des Ausführungsbeispiels der Figur 2, wobei sowohl das Herstellungsverfahren als auch die verwendeten Ausgangsmaterialien analog zu dem der Crashbox 25 der Figur 2 sind. Durch die Variation der Fasen lässt sich das Deformationsverhalten abhängig vom geforderten Kraft-Weg-Verlauf und vom maximal zulässigen Kraftniveau gezielt einstellen, insbesondere in Verbindung mit den endseitig und in den Fasen angeordneten Quersicken.

### Bezugszeichenliste

- 1: Hohlkammerbauteil
- 2: Schale
- 3: Schale
- 4: Schenkel
- 5: Schenkel
- 6: Schenkel
- 7: Schenkel
- 8: Basis
- 9: Basis
- 10: Verbindungsbereich
- 11: Verbindungsbereich
- 12: Verbindungsbereich
- 13: Verbindungsbereich
- 14: Fase
- 15: Fase
- 16: Fase
- 17: Fase
- 18: Fase
- 19: Fase
- 20: Fase
- 21: Fase
- 22: Längenabschnitt
- 23: Sicke
- 24: Sicke
- 25: Crashbox
- 26: Ende
- 27: Ende
- 28: Fügefläche
- 29: Fügestelle
- 30: Längsachse
- 31: Breite

## Patentansprüche

1. Hohlkammerbauteil (1) zum Einbau in Längsrichtung eines Kraftfahrzeuges mit zwei c-förmigen Schalen (2, 3), wobei diese jeweils aus zwei Schenkeln (4, 5; 6, 7) gebildet sind, die über eine Basis (8, 9) miteinander verbunden sind, und wobei die beiden c-förmigen Schalen (2, 3) an ihren Schenkeln (4, 5; 6, 7) miteinander gefügt sind, **dadurch gekennzeichnet, dass** die Schalen (2, 3) aus einem Kaltformstahl bestehen und in ihren Verbindungsbereichen (10, 11; 12, 13) zur jeweiligen Basis (8, 9) jeweils mit wenigstens einer Fase (14, 15, 16, 17; 18, 19, 20, 21) ausgebildet sind, wobei diese wenigstens eine Fase (14, 15, 16, 17; 18, 19, 20, 21) gegenüber den Schenkeln (3, 4; 5, 6) und/oder der die Schenkeln (3, 4; 5, 6) verbindende Basis (8, 9) um einen Winkel α zwischen 120° bis 160° geneigt ist sowie an einem endseiteigen Längenabschnitt (22) mit wenigstens einer Sicke (23, 24) ausgebildet ist.

2. Hohlkammerbauteil (1) nach Anspruch 1, **dadurch gekennzeichnet, dass** es als Crashbox (25) für eine Stoßfängeranordnung eines Kraftfahrzeuges oder als Längsträger eines Kraftfahrzeuges ausgebildet ist.

3. Hohlkammerbauteil (1) nach Anspruch 1, **dadurch gekennzeichnet, dass** die beiden c-förmigen Schalen (2, 3) an ihren Schenkeln (4, 5; 6, 7) stumpf oder überlappend miteinander stoffschlüssig gefügt, insbesondere verschweißt sind.

4. Hohlkammerbauteil (1) nach einem der vorhergehenden Ansprüche, **dadurch gekennzeichnet, dass** sich die wenigstens eine Fase (14, 15, 16, 17; 18, 19, 20, 21) über eine gesamte Längserstreckung von einem ersten Ende (26) bis zu einem zweiten Ende (27) des Hohlkammerbauteils (1) beziehungsweise der Schalen (7, 8) erstreckt.

5. Hohlkammerbauteil (1) nach einem der vorhergehenden Ansprüche, **dadurch gekennzeichnet, dass** die wenigstens eine Fase (14, 15, 16, 17; 18, 19, 20, 21) mit Ausnahme der wenigstens einen Sicke (23, 24) als plane Fläche ausgebildet ist.

6. Hohlkammerbauteil (1) nach einem der vorhergehenden Ansprüche, **dadurch gekennzeichnet, dass** eine Sicke (23, 24) in einem Abstand zwischen einem Viertel und einem Drittel der Länge des Hohlkammerbauteils (1) von dessen ersten oder zweiten Ende (26, 27) angeordnet ist.

7. Hohlkammerbauteil (1) nach einem der vorhergehenden Ansprüche, **dadurch gekennzeichnet, dass** die Schenkel (4; 5, 6, 7) und die Basis (8, 9) als plane Wände ausgebildet sind.

8. Hohlkammerbauteil (1) nach einem der vorhergehenden Ansprüche, **dadurch gekennzeichnet, dass** die Schenkel (4; 5, 6, 7) und die Basis (8, 9) in einem Winkel von im Wesentlichen 90° zueinander angeordnet sind.

9. Hohlkammerbauteil (1) nach einem der vorhergehenden Ansprüche, **dadurch gekennzeichnet, dass** der Kaltformstahl ein weiterentwickelter hochfester Stahl (AHS-Stahl) der 1.Generation (Dualphasenstahl, Komplexphasenstahl) oder der 3. Generation (Cold-rolled High Formability Steel) ist, der Kohlenstoff, Silizium, Mangan, Titan, Niob, Chrom, Molybdän, Kupfer und Bor enthält.

10. Hohlkammerbauteil (1) nach einem der vorhergehenden Ansprüche, **dadurch gekennzeichnet, dass** es verzinkt und/oder KTL-lackiert ist

11. Hohlkammerbauteil (1) nach einem der vorhergehenden Ansprüche, **dadurch gekennzeichnet, dass** die Schalen (3, 4) in der Basis und in den Schenkeln (in den Planen Flächen) eine Zugfestigkeit Rₘ zwischen 750 und 1200 MPa, bevorzugt zwischen 850MPa und 1200 MPa aufweist.

12. Hohlkammerbauteil (1) nach einem der vorhergehenden Ansprüche, **dadurch gekennzeichnet, dass** sich die wenigstens eine Sicke (23, 24) quer zur Längsachse (30) des Hohlkammerbauteils (1), insbesondere in dessen Hochrichtung oder Querrichtung erstreckt, wobei die Längs-, Hoch- und Querrichtung ein rechtwinkliges x, y, z-Koordinatensystem bilden.

13. Hohlkammerbauteil (1) nach Anspruch 12, **dadurch gekennzeichnet, dass** sich die wenigstens eine Sicke (23, 24) bis in einen der wenigstens einen Fase (14, 15, 16, 17; 18, 19, 20, 21) benachbarten Schenkel (4, 5; 6, 7) und/oder benachbarten Basis (8, 9) der Schale (2, 3) erstreckt, insbesondere um nicht mehr als 10% der Höhe der jeweiligen Basis (8, 9) beziehungsweise der Breite des jeweiligen Schenkels (4, 5; 6, 7).

14. Hohlkammerbauteil (1) nach einem der vorhergehenden Ansprüche, **dadurch gekennzeichnet, dass** die wenigstens eine Sicke (23, 24) eine Breite (31) aufweist, die der vierbis achtfachen Wanddicke der jeweiligen Schalen (2, 3) entspricht.

15. Crashmanagementsystem mit einem Stoßfängerquerträger und zwei daran verschraubten oder verschweißten als Crashboxen (25) ausgebildeten Hohlkammerbauteilen (1) nach einem der vorhergehenden Ansprüche.
